Europäisches Patentamt

European Patent Office

Office européen des brevets

(19)

(11) Numéro de publication: **0 274 302 B1**

(12) **FASCICULE DE BREVET EUROPEEN**

(45) Date de publication de fascicule du brevet:
24.07.91

(51) Int. Cl.⁵: **G06K 13/08**, G06K 13/06

(21) Numéro de dépôt: **87402730.3**

(22) Date de dépôt: **02.12.87**

(54) **Dispositif de lecture/écriture pour cartes à mémoire électronique.**

(30) Priorité: **03.12.86 FR 8616887**

(43) Date de publication de la demande:
**13.07.88 Bulletin 88/28**

(45) Mention de la délivrance du brevet:
**24.07.91 Bulletin 91/30**

(84) Etats contractants désignés:
**BE CH DE ES GB IT LI NL SE**

(56) Documents cités:
**EP-A- 0 202 622
FR-A- 2 505 523
FR-A- 2 578 072**

**IBM TECHNICAL DISCLOSURE BULLETIN, vol.
18, no. 3, août 1975, page 656, New York, US;
F.J. BEALLE: "Manual card reader with cardsmoother read head"**

**IBM TECHNICAL DISCLOSURE BULLETIN, vol.
29, no. 5, octobre 1986, pages 2188-2189,
New York, US; "Improved reader slot design
for swipe motion magnetic stripe badge readers"**

(73) Titulaire: **SCHLUMBERGER INDUSTRIES
50, avenue Jean Jaurès
F-92120 Montrouge(FR)**

(72) Inventeur: **Mollet, Jean Paul
47, Elysée 2
F-78170 La Celle Saint Cloud(FR)**

(74) Mandataire: **Hasenrader, Hubert et al
Cabinet BEAU DE LOMENIE 55, rue d'Amsterdam
F-75008 Paris(FR)**

## Description

La présente invention concerne un dispositif de lecture/écriture pour cartes à mémoire électronique.

Les cartes à mémoire électronique sont maintenant bien connues. Une telle carte se compose essentiellèment d'un corps de carte de forme générale rectangulaire dans lequel est implanté un module électronique. Le module électronique comprend un circuit intégré comportant au moins un circuit mémoire et des plages externes de contact électrique qui sont reliées aux bornes du circuit intégré. Pour exploiter une telle carte on introduit celle-ci dans une machine de traitement. La machine de traitement comprend des circuits de traitement pour expoiter les informations contenues dans la mémoire de la carte et pour modifier ces informations et un dispositif de lecture/écriture qui permet d'assurer une connexion électrique temporaire entre les plages de contact de la carte et les circuits de traitement de la machine. L'établissement de cette connexion sert à alimenter le circuit intégré de la carte, à transmettre les instructions d'écriture/lecture de la mémoire de la carte, à appliquer la tension d'écriture et un signal d'horloge etc...

Un dispositif de lecture/écriture comprend essentiellement un boitier qui comporte sur sa face avant une fente d'introduction de la carte et qui définit intérieurement un couloir de guidage servant à positionner la carte de telle manière que, lorsque celle-ci est en position de traitement, c'est-à-dire en position enfoncée, les plages de contact de la carte soient en contact électrique avec un connecteur qui est monté dans le couloir de guidage. En ce qui concerne les cartes à mémoire selon la norme ISO, les plages de contact sont disposées à proximité d'un coin du corps de la carte. Le connecteur du dispositif de lecture/écriture est donc excentré par rapport au plan médian du dispositif de lecture/écriture.

Il existe plusieurs types de dispositif de lecture/écriture. Dans certains d'entre eux la carte ne pénêtre que partiellement dans le couloir de guidage lorsqu'elle est amenée en position de traitement, le déplacement de la carte pouvant être effectué, soit manuellement par l'usager, soit par un moteur entraînant un galet .Le dispositif est alors dit "sans avalement". Dans d'autres dispositifs de lecture/écriture la carte pénètre entièrement dans le couloir de guidage pour arriver en position de traitement, le déplacement de la carte dans les deux sens, étant obtenu par un moteur d'entraînement. Avec le deuxième type de dispositif,qui est dit "à avalement", on est sûr que le détenteur de la carte ne déplacera pas sa carte pendant le traitement de celle-ci. En revanche si les moyens de déplacement de la carte deviennent défaillants, la carte reste bloquée dans le couloir de guidage ce qui est dommageable pour le titulaire de la carte et pour la société gérant le dispositif de lecture/écriture puisque celle-ci devient inutilisable jusqu'à ce qu'on ait procédé à sa réparation.

En outre beaucoup d'usagers voient avec réticence leur carte entièrement avalée par le dispositif de lecture.

Avec le deuxième type de dispositif de lecture/écriture ce risque et cette crainte n'existent pas puisqu'une partie du corps de la carte fait toujours saillie à l'extérieur du lecteur de cartes. Cependant les deux types de dispositifs de lecture/écriture peuvent faire l'objet d'actes de malveillance visant à en interdire le fonctionnement. Un de ces actes les plus fréquents consiste dans l'introduction dans le couloir du guidage du dispositif de lecture/écriture d'une partie d'un corps de carte authentique mais qui a été coupé de telle manière que sa longueur soit un peu inférieure à la longueur du couloir de guidage, dans le cas d'un lecteur du premier type, et un peu inférieure à la course de la carte dans le cas d'un lecteur du deuxième type. Dans les deux cas les usagers se présentant après l'accomplissement de cet acte de malveillance ne pourront pas utiliser le dispositif de lecture/écriture puisque la portion de corps de carte ne peut pas être extraite du couloir de guidage. Cela nécessite l'intervention d'une équipe de maintenance et interdit le fonctionnement du dispositif de lecture/écriture pour un temps non négligeable. Le document EP-A-186 737 décrit un lecteur de cartes à mémoire électronique dans lequel la face avant comprend une échancrure entourant la fente d'introduction. Cependant, cette échancrure n'a qu'une profondeur très réduite et ne permet que d'extraire de la fente une carte normale. Ce document ne permet donc pas de résoudre le problème posé.

Pour remédier à ces inconvénients, le but de l'invention est de fournir un dispositif de lecture/écriture de cartes à mémoire électronique qui permette, en particulier, d'extraire commodément des portions de cartes introduites par malveillance dans ce dispositif.

Pour atteindre ce but le dispositif de lecture/écriture pour des cartes à mémoire électronique qui comprennent un corps et des plages de contact électrique disposées sur une des faces principales dudit corps, qui comporte une fente d'introduction et un couloir de guidage de ladite carte limité par deux parois sensiblement parallèles entre elles, un connecteur pour entrer en contact électrique avec les plages de contact de ladite carte lorsque celle-ci est en position de traitement, ledit connecteur étant disposé à l'intérieur dudit couloir et solidaire d'une desdites parois, une desdites parois comportant une échancrure faisant communiquer ledit couloir de guidage avec l'extérieur dudit dispositif, ladite échancrure s'étendant sur ladite paroi en dehors de la zone de la paroi où ledit connecteur est fixé et il se caractérise en ce que l'échancrure s'étend selon la direction d'introduction de la carte sur une longueur au moins égale à celle qui sépare l'entrée de ladite fente d'introduction dudit connecteur.

Grâce à cette échancrure ou de ces deux échancrures la présence d'une portion de carte dans le couloir de guidage est visible de l'extérieur de la machine dans laquelle le dispositif est monté. L'usager qui se présente pour utiliser le dispositif de lecture/écriture constate la présence de la portion de carte et peut l'extraire soit manuellement soit à l'aide d'un objet pointu ad hoc.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel:

La figure 1 est une vue en perspective d'un premier mode de réalisation d'un dispositif de lecture/écriture selon l'invention;

La figure 2 est une vue en coupe verticale selon le plan Q de la figure 2;

La figure 3 est une vue en coupe verticale selon le plan P de la figure 1;

La figure 4 est une vue de face partielle d'un dispositif de lecture/écriture selon les figures 1 à 3, monté dans le boitier d'une machine ;

La figure 5 est une vue en coupe verticale selon le plan V-V de la figure 4 ;

La figure 6 est une vue de dessus d'un deuxième mode de réalisatio, d'un dispositif de lecture/écriture selon l'invention ; et

La figure 7 est une vue en coupe verticale selon le plan VII-VII de la figure 6.

Dans la suite de la description on appellera par commodité, lecteur de cartes un dispositif de lecture/écriture pour cartes à mémoire électronique.

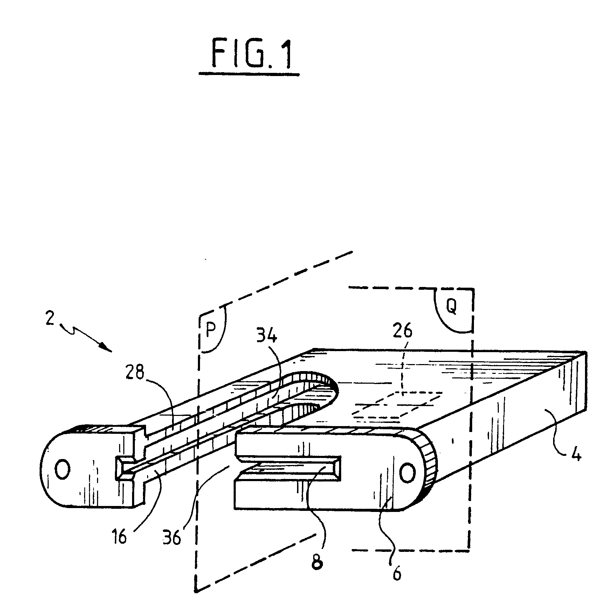

En se référant aux figures 1 à 3, on va tout d'abord décrire un lecteur de cartes selon l'invention du type sans avalement, c'est à dire un lecteur dans lequel une partie du corps de la carte fait saillie hors du lecteur lorsque celle-ci est en position enfoncée.

Le lecteur 2 comprend un boitier 4 muni d'une bride frontale de fixation 6. La bride 6 est percée d'une fente d'introduction 8 de cartes qui débouche dans une cavité 10 définie par le boitier 4 proprement dit. La cavité 10 est constituée en partie par un couloir de guidage 12 de la carte 24. Le couloir de guidage est limité par une table inférieure 14 plane formée par la face interne de la paroi inférieure 16 du boitier 4, et par deux parois latérales 18 et 20. En outre, la table inférieure 14 est munie de butée mécaniques 22 qui limitent la course d'introduction de la carte.

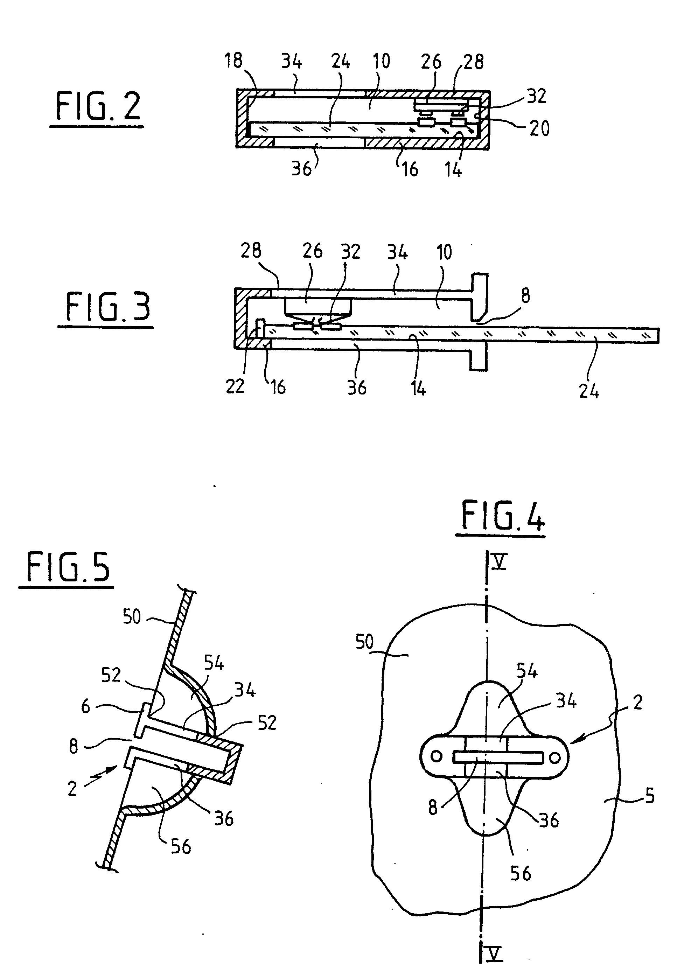

Un connecteur électrique 26 est monté sur la face interne de la paroi supérieure 28 du boitier 4. Sur les figures 2 et 3 on a représenté schématiquement des lames de contact électrique 32 du connecteur 26. La paroi supérieure 28 du boitier 4 est munie d'une échancrure 36. Les deux échancrures 34 et 36 ont la même forme et sont disposées en regard l'une de l'autre. Les échancrures 34 et 36 sont allongées selon la direction d'introduction des cartes. Selon cette direction, elles ont une longueur qui est sensiblement égale à celle qui sépare la fente d'introduction 8 des butées mécaniques 22 limitant l'introduction de la carte, et elles débouchent dans la bride 6.

Le fonctionnement du lecteur qui vient d'être décrit est très simple. L'usager peut tout d'abord vérifier qu'aucun objet parasite n'est engagé dans le couloir de guidage 12. Si tel est le cas, il peut aisément l'en extraire grâce à la présence des deux échancrures 34 et 36. Puis il introduit sa carte dans le lecteur. Il la pousse jusqu'à ce que le bord avant du corps de la carte arrive en contact avec les butées 22. Dans cette position, qui est détectée par un micro-contact, les plages de contact de la carte sont en contact électriques avec les lames conductrices 32 du connecteur 26. Lorsque le transfert d'information entre la carte et les circuits de traitement associés au lecteur est terminé, l'usager peut retirer sa carte.

Il faut remarquer que les échancrures vont de préférence jusqu'aux butées mécaniques placées au fond du couloir de guidage, donc même des objets de faible longueur introduits par malveillance dans le lecteur peuvent être détectés et aisément enlevés. Bien entendu le boitier 4 pourrait ne comporter qu'une seule échancrure 34 ou 36. De même la ou les échancrures pourraient avoir une forme différente. On comprend cependant qu'il doit subsister des parois supérieure et inférieure au moins la partie nécessaire à la fixation du connecteur et au guidage latéral de la carte.

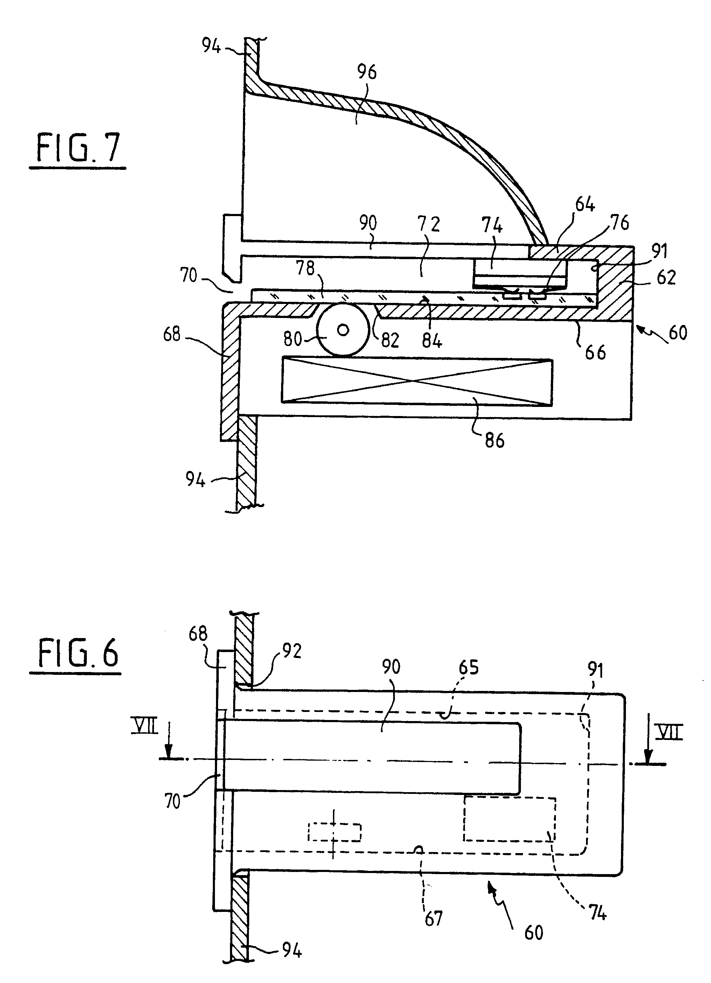

Les figures 4 et 5 montrent un exemple d'implantation du lecteur 2 dans une machine commandée par une carte à mémoire électronique. On a représenté une partie de la paroi 50 du carter de la machine. Le lecteur 2 est monté dans la machine par une ouverture 52 et fixé par sa bride 6. La paroi 50 comporte deux zones en creux 54 et 56 pour permettre l'accès aux échancrures 34 et 36.

Les figures 6 et 7 montrent un lecteur de cartes à avalement 60 selon l'invention. Le lecteur 60 comprend un boitier 62 comportant une paroi supérieure 64 et une paroi inférieure 66. La face frontale du boitier 62 comprend une bride de fixation 68 percée d'une fente d'introduction 70. Les parois 64 et 66 définissent avec les parois latérales 65 et 67 du boitier 62 un couloir de guidage 72 pour la carte. A l'intérieur du couloir de guidage 72 est monté un connecteur 74 qui est solidaire de la paroi supérieure 64 du boitier. Les lames de contact électrique du connecteur 74 sont référencées 76. Comme il s'agit d'un lecteur à avalement, il comprend également un système d'entraînement de la carte 78 jusqu'à sa position de traitement. Sur la figure 7 le système d'entrainement est représenté par un galet 80 qui fait saillie dans le couloir de guidage par une ouverture 82 ménagée dans la paroi inférieure 66. La face interne 84 de la paroi inférieure 66 forme la table du couloir de guidage 72.

En 86 on a figuré de façon schématique le moteur d'entraînement du galet 80 et les organes de commande du moteur pour provoquer l'introduction de la carte et sa restitution.

Conformément à l'invention, la paroi supérieure 64 du boîtier est munie d'une échancrure allongée 90 disposée selon la direction d'introduction de la carte. La longueur de l'échancrure 90 selon cette direction est au moins égale à la distance séparant la fente d'introduction 70 au connecteur 74. De préférence, l'échancrure s'étend jusqu'au fond 91 du couloir de guidage. Comme le montre mieux la figure 7, le lecteur 60 est monté dans la machine commandée par le lecteur dans une ouverture 92 ménagée dans sa paroi 94. La paroi 94 comporte une portion en creux 96 pour permettre l'accès à l'échancrure 90.

Avec ce deuxième mode de réalisation, non seulement l'usager peut extraire une portion de carte introduite par malveillance, mais il peut encore voir sa carte lorsque celle-ci est en position de lecture. Il va de soi que l'invention pourrait tout aussi bien s'appliquer à un lecteur de cartes dans lequel la carte est introduite dans le sens de la largeur.

Il va de soi que les encoches ménagées dans la paroi supérieure et/ou la paroi inférieure du boîtier pourraient avoir une forme différente de celle qui est représentée sur les figures annexées. Il faut que dans la paroi inférieure, l'échancrure laisse une portion de paroi à proximité de chacune des deux parois verticles afin d'assurer le supportage de la carte. De préférence il subsiste également une partie de la paroi inférieure en regard du connecteur afin d'assurer un meilleur contact entre les plages de la carte et les lames conductrices du connecteur. En ce qui concerne la paroi supérieure du boltier, il faut que l'échancrure en laisse subsister une portion suffisante pour permettre la fixation du connecteur.

## Revendications

1. Dispositif de lecture/écriture pour des cartes à mémoire électronique (24) comprenant un corps et des plages de contact électrique disposées sur une des faces principales dudit corps, comportant une fente d'introduction (8) et un couloir de guidage (12) de ladite carte, limité par deux parois (16, 28) sensiblement parallèles entre elles, un connecteur (26) pour entrer en contact électrique avec les plages de contact de ladite carte lorsque celle-ci est en position de traitement, ledit connecteur étant disposé à l'intérieur dudit couloir et solidaire d'une desdites parois, une desdites parois comportant une échancrure (34) faisant communiquer ledit couloir de guidage avec l'extérieur dudit dispositif, ladite échancrure s'étendant sur ladite paroi en dehors de la zone de la paroi où ledit connecteur est fixé, caractérisé en ce que l'échancrure s'étend selon la direction d'introduction de la carte sur une longueur au moins égale à celle qui sépare l'entrée de ladite fente d'introduction dudit connecteur.

2. Dispositif selon la revendication 1, caractérisé en ce que l'échancrure (36) ménagée dans la paroi (16) ne comportant pas ledit connecteur (26) est disposée de telle manière qu'il reste une portion de paroi de part et d'autre de ladite échancrure selon une direction perpendiculaire à la direction d'introduction de la carte.

3. Dispositif selon l'une quelconque des revendications 1 et 2, caractérisé en ce que ledit couloir de guidage (12) est muni de moyens formant butée (22) et en ce que la ou lesdites échancrures s'étendent sensiblement depuis ladite fente d'introduction (8) jusqu'auxdits moyens formant butée.

4. Dispositif selon l'une quelconque des revendications 1 à 3, caractérisé en ce que les parois (16, 28) formant le couloir de guidage (12) ont une longueur inférieure à celle du corps de carte.

5. Dispositif selon l'une quelconque des revendications 1 à 4, caractérisé en ce que chacune des parois (16, 28) comporte une échancrure (34, 36).

## Claims

1. Read/write device for electronic memory cards (24) comprising a body and electrical contact tabs disposed on one of the main faces of the said body, having an insertion slot (8) and a guide passage (12) for the said card, defined by two walls (16, 28) substantially parallel with one another, a connector (26) for entering into electric contact with the contact tabs of the said card when the latter is in the processing position, the said connector being disposed in the interior of the said passage and being fixed to one of the said walls, one of the said walls having a notch (34) so that the said guide passage can communicate with the exterior of the said device, the said notch extending over the said wall outside the zone of the wall at which the said connector is fixed, characterised in that the notch extends in the direction of insertion of the card over a length at least equal to the distance separating the entrance to the said insertion slot from the said connector.

2.  Device according to claim 1, characterised in that the notch (36) provided in the wall (16) not having the said connector (26) is disposed in such a manner that a portion of wall remains on either side of the said notch in a direction perpendicular to the direction of insertion of the card.

3.  Device according to either of claims 1 and 2, characterised in that the said guide passage (12) is provided with means forming a stop (22) and that the said notch or notches extend(s) substantially from the said insertion slot (8) to the said means forming a stop.

4.  Device according to any one of claims 1 to 3, characterised in that the walls (16, 28) forming the guide passage (12) have a length smaller than that of the card body.

5.  Device according to any one of claims 1 to 4, characterised in that each of the walls (16, 28) has a notch (34, 36).

**Patentansprüche**

1.  Vorrichtung zum lesen/Schreiben für elektronische Speicherkarten (24) mit einem Körper und elektrischen Kontaktflächen, die auf einer der Hauptseiten des Körpers angeordnet sind, mit einem Einführspalt (8) und einem Führugskanal (12) der Karte, der durch zwei Seitenwände (16, 28) begrenzt ist, die im wesentlichen zueinander parallel sind, einem Stecker (26) für das Eingehen eines elektrischen Kontaktes mit den Kontaktflächen der Karte, wenn diese sich in der Betriebsstellung befindet, wobei der Stecker im Inneren des Kanals angeordnet ist, und mit den Seitenwänden verbunden ist, wobei eine der Seitenwände einen bogenförmigen Ausschnitt (34) aufweist, der den Führungskanal mit dem Äußeren der Vorrichtung verbindet, wobei der bogenförmige Ausschnitt sich auf der Seitenwand außerhalb der Zone der Seitenwand erstreckt, wo der Stecker befestigt ist, **dadurch gekennzeichnet**, daß der bogenförmige Ausschnitt sich entlang der Einführrichtung der Karte auf einer Länge erstreckt, die wenigstens gleich jener ist, die den Eintritt des Einführspaltes von dem Stecker trennt.

2.  Vorrichtung nach Anspruch 1, **dadurch gekennzeichnet**, daß der bogenförmige Ausschnitt (36), der in der Seitenwand (16) ausgebildet ist, die diesen Stecker (26) nicht aufweist, derart angeordnet ist, daß ein Seitenwandbereich beiderseits des bogenförmigen Ausschnitts entlang einer Richtung, die senkrecht zur Einführrichtung der Karte ist, übrig bleibt.

3.  Vorrichtung nach Anspruch 1 oder 2, **dadurch gekennzeichnet**, daß der Führungskanal (12) mit Einrichtungen versehen ist, die einen Anschlag (22) bilden, und daß der oder die bogenförmigen Ausschnitte sich im wesentlichen von dem Einführspalt (8) bis zu den Anschlageinrichtungen erstrecken.

4.  Vorrichtung nach einem der Ansprüche 1 bis 3, **dadurch gekennzeichnet**, daß die Seitenwände (16, 28), die den Führungskanal (12) bilden, eine Länge aufweisen, die geringer ist als jene des Körpers der Karte.

5.  Vorrichtung nach einem der Ansprüche 1 bis 4, **dadurch gekennzeichnet**, daß jede Seitenwand (16, 28) einen bogenförmigen Ausschnitt (34, 36) aufweist.

# FIG.1

FIG. 2

FIG. 3

FIG.5

FIG.4

FIG.7

FIG.6